# EUROPÄISCHE PATENTSCHRIFT

(11) **EP 0 342 149 B1**
(45) Veröffentlichungstag und Bekanntmachung des Hinweises auf die Patenterteilung: **20.04.1994**
(21) Anmeldenummer: 89730116.4
(22) Anmeldetag: 03.05.1989
(51) Int. Cl.: H01B 7/28

(54) **Kunststoffisolierter elektrischer Leiter und Verfahren zu seiner Herstellung**
Plastic-insulated electric conductor and method of manufacture
Conducteur électrique isolé par des matières synthétiques et procédé de fabrication

(30) Priorität: 10.05.1988 DE 3816496
(43) Veröffentlichungstag der Anmeldung: 15.11.1989
(73) Patentinhaber: SIEMENS AKTIENGESELLSCHAFT, 80333 München (DE)
(72) Erfinder: Janssen, Karl-Heinz, Dipl.-Ing., D-2880 Brake (DE); Lenz, Michael, Dipl.-Ing., D-2880 Brake (DE)

(56) Entgegenhaltungen:
- EP-A- 0 022 745
- DE-A- 3 306 077
- DE-A- 3 630 918
- US-A- 4 319 074
- PATENT ABSTRACTS OF JAPAN, unexamined applications, Sektion E, Band 1, Nr. 133, November 4, 1977 THE PATENT OFFICE JAPANESE GOVERNMENT Seite 6169 E 77

## Beschreibung

Die Erfindung liegt auf dem Gebiet der elektrischen Kabel und Leitungen und ist bei der konstruktiven Ausgestaltung und Herstellung von flexiblen, kunststoffisolierten elektrischen Leitern, also von flexiblen Adern oder Aderleitungen, anzuwenden. Derartige Adern oder Aderleitungen werden beispielsweise für Kabelbäume von Kraftfahrzeugen oder auch für mehradrige Verbindungsleitungen in Kraftfahrzeugen eingesetzt (Buch "Kabel- und Leitungsfertigung", VEB-Verlag Technik Berlin, 1976, Seiten 49 und 315).

Bei der zunehmenden elektrischen und elektronischen Ausstattung von Kraftfahrzeugen sind zunehmend einzelne elektrische oder elektronische Komponenten außerhalb eines gegen Umwelteinflüsse geschützten Raumes angeordnet, beispielsweise Sensoren im Bereich der Räder. Die elektrischen Anschlüsse dieser Komponenten und die elektrischen Zuleitungen sind u. a. der Einwirkung von Flüssigkeiten wie Wasser, Kraftstoff, Motor- und Getriebeöl usw. ausgesetzt. Derartige Flüssigkeiten können über den mehrdrähtigen Leiter der jeweiligen Anschlußleitung zu den angeschlossenen elektrischen und/oder elektronischen Komponenten vordringen und dann zu einer Beeinträchtigung der elektrischen Funktion dieser Komponenten führen.

Zur längswasserdichten Ausgestaltung eines Leiterseiles für elektrische Energiekabel ist es bereits bekannt, den Mitteldraht eines siebendrähtigen Leiterseiles im Querschnitt kleiner als die übrigen Drähte auszubilden und diesen Mitteldraht mit einer plastisch verformbaren Isolierschicht zu versehen, wobei der Querschnitt des isolierten Mitteldrahtes größer ist als der Querschnitt der nichtisolierten anderen Drähte (DE-A1 3630 918).

Ausgehend von einem mehrdrähtigen elektrischen Leiter mit den Merkmalen des Oberbegriffes des Patentanspsruches 1 liegt der Erfindung die Aufgabe zugrunde, einen solchen längswasserdichten Leiter so auszugestalten, daß beim Anschlagen von Kontaktelementen am Leiterende alle Drähte des Leiters einwandfrei kontaktiert werden. Zur Lösung dieser Aufgabe ist gemäß der Erfindung vorgesehen, daß alle Drähte des Leiters auf einen Strang aus einem Schmelzkleber auf der Basis von Polyamid oder Polyester aufgebracht und/oder wenigstens abschnittsweise in diesen Strang eingebettet sind, wobei der Strang einen Trägerfaden aus Baumwolle oder aus einem wärmebeständigen Kunststoff enthält.

Eine derartige Ausgestaltung des isolierten elektrischen Leiters ist insbesondere für Leiter mit einem Querschnitt kleiner/ gleich 2,5 mm² geeignet. Durch die vorgesehene Ausgestaltung ist zusätzlich zur Längswasserdichtigkeit gewährleistet, daß ein solcher Leiter wie die bisher üblichen Leiter maschinell konfektioniert, d. h. abgelängt, abisoliert und mit einem Kontaktteil versehen werden kann. Die bisher verwendeten Einrichtungen zum automatischen Anschlagen von Kontaktteilen können also unverändert weiter benutzt werden.

Ein gemäß der Erfindung verwendeter Strang kann beim Aufbringen der Leiterdrähte oberflächlich erwärmt werden, so daß die Leiterdrähte in die Oberfläche des Stranges eingebettet werden. Man kann aber auch den isolierten Leiter in Abständen oder über seine ganze Länge mit Wärme behandeln, wobei der Schmelzkleber zwischen die einzelnen Leiterdrähte dringt und zugleich eine Verbindung mit der Isolierhülle eingeht. Eine derartige Wärmebehandlung kann auch erst an der mit Kontaktteilen versehenen Ader oder Aderleitung an bestimmten Stellen oder über deren ganze Länge erfolgen.

Der auf den Strang aufgebrachte Leiter kann ein- oder mehrlagig aufgesponnen oder auch in Form eines Geflechtes aufgebracht sein.

Um die Längswasserdichtigkeit des isolierten elektrischen Leiters noch sicherer zu gestalten oder auch als Absicherung gegen eventuelle Verarbeitungsfehler kann zusätzlich zu dem die Längwasserdichtigkeit gewährleistenden Strang zwischen dem Leiter und der Kunststoffisolierung eine dünne Schicht aus Quellpulver oder eine Quellvliesfolie angeordnet sein.

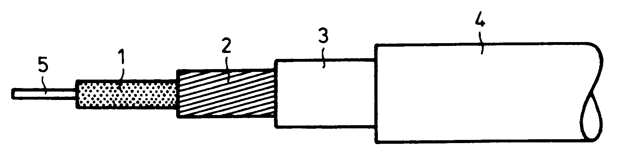

Ein Ausführungsbeispiel des neuen elektrischen Leiters ist in der Figur dargestellt.

Die Figur zeigt einen kunststoffisolierten elektrischen Leiter, bei dem alle Drähte des Leiters 2 einlagig auf einen Strang 1 aus einem Schmelzkleber aufgeseilt sind. Der Strang ist dabei mit einem Tragfaden 5 versehen. - Auf den Leiter 2 ist eine Quellvliesfolie 3 aufgebracht, die ihrerseits von der extrudierten Kunststoffisolierung 4 umgeben ist.

Bei dem in der Figur dargestellten isolierten Leiter handelt es sich im Sprachgebrauch der Kabeltechnik um eine Ader oder eine Aderleitung. Eine oder mehrere solcher Adern können - gegebenenfalls zusammen mit nicht längswasserdicht ausgebildeten Adern - auch miteinander verseilt und mit einem gemeinsamen Mantel umgeben werden und somit eine mehradrige Leitung bilden. Sofern Wert auf die Längswasserdichtigkeit einer solchen Leitung gelegt wird, empfiehlt es sich, die Hohlräume zwischen den Adern mit einem unter Feuchtigkeitseinwirkung aufquellenden Material zu füllen.

## Patentansprüche

1. Mit einer Kunststoffisolierung versehener mehrdrähtiger elektrischer Leiter, bei dem sich zwischen den Drähten ein die Längswasserdichtigkeit des isolierten Leiters gewährleistendes Material befindet,
**dadurch gekennzeichnet,**
daß alle Drähte des Leiters (2) auf einen Strang (1) aus einem Schmelzkleber auf der Basis von Polyamid oder Polyester aufgebracht und/oder wenigstens abschnittsweise in diesen Strang eingebettet sind, wobei der Strang einen Trägerfaden (5) aus Baumwolle oder aus einem wärmebeständigen Kunststoff enthält.

2. Elektrischer Leiter nach Anspruch 1,
**dadurch gekennzeichnet,**
daß zwischen dem Leiter (2) und der Kunststoffisolierung (4) eine dünne Schicht aus Quellpulver oder eine Quellvliesfolie (3) angeordnet ist.

3. Verfahren zur Herstellung eines elektrischen Leiters nach Anspruch 1 oder 2,
**dadurch gekennzeichnet,**
daß der isolierte Leiter zur Einbettung der Leiterdrähte in den Strang aus einem Schmelzkleber in Abständen oder über seine ganze Länge mit Wärme behandelt wird.

## Claims

1. Multi-wire electrical conductor provided with plastics insulation, in which a material which ensures the longitudinal water tightness of the insulated conductor is disposed between the wires, characterised in that all the wires of the conductor (2) are applied to a strand (1) of a fusion adhesive based on polyamide or polyester and/or are embedded in this strand at least in sections, whereby the strand contains a carrier thread (5) of cotton or of a heat-resistant plastic.

2. Electrical conductor according to claim 1, characterised in that between the conductor (2) and the plastics insulation (4) there is disposed a thin layer of water swellable powder or a swellable fleece tape (3).

3. Process for the production of an electrical conductor according to claim 1 or 2, characterised in that the insulated conductor is heat-treated at intervals or over its entire length for embedding the conductor wires into the strand of fusion adhesive.

## Revendications

1. Conducteur électrique à plusieurs brins et muni d'une isolation en matière plastique, dans lequel il est prévu, entre les brins, un matériau assurant l'étanchéité longitudinale à l'eau du conducteur isolé,
caractérisé
en ce que tous les brins du conducteur (2) sont déposés sur un cordon (1) en une colle fusible à base de polyamide ou de polyester et/ou sont enrobés, au moins par tronçons, dans ce cordon, le cordon contenant un fil support (5) en coton ou en une matière plastique résistant à la chaleur.

2. Conducteur électrique suivant la revendication 1,
caractérisé
en ce qu'il est prévu, entre le conducteur (2) et l'isolation (4) en matière plastique, une couche mince en poudre gonflante ou une feuille (3) non tissée gonflante.

3. Procédé de fabrication d'un conducteur électrique suivant la revendication 1 ou 2,
caractérisé
en ce qu'il consiste à traiter thermiquement le conducteur isolé par intervalles ou sur toute sa longueur pour enrober les brins du conducteur dans le cordon en une colle fusible.
